# FASCICULE DE BREVET EUROPEEN

(11) **EP 2 359 987 B1**
(45) Date de publication et mention de la délivrance du brevet: **16.09.2020**
(21) Numéro de dépôt: 11305166.8
(22) Date de dépôt: 17.02.2011
(51) Int. Cl.: B25J 9/06

(54) **Dispositif articulé mobile à capacité de franchissement**
Mobile Gelenkvorrichtung zum Überwinden von Hindernissen
Articulated mobile device for clearing obstacles

(30) Priorité: 19.02.2010 FR 1051197
(43) Date de publication de la demande: 24.08.2011
(73) Titulaire: M-Tecks AG, 19600 Saint Pantaléon de Larche (FR)
(72) Inventeur: Meissonnier, Julien, 19100 BRIVE LA GAILLARDE (FR); Marsaleix, Fabrice, 19600 SAINT PANTALEON DE LARCHE (FR)
(74) Mandataire: Aquinov

(56) Documents cités:
- DE-A1- 3 811 795
- FR-A1- 2 741 584
- JP-U- 4 028 987
- US-A1- 2005 007 055

## Description

La présente invention est relative à un dispositif articulé, mobile et à capacité de franchissement, ledit dispositif étant piloté mécaniquement et équipé d'un dispositif de report d'orientation entre deux articulations reliant chacune deux modules.

Dans certaines applications et dans certains lieux, il peut être impossible ou dangereux qu'un homme effectue lui-même certaines opérations.

Aussi, divers engins robotisés ou télécommandés ont été développés pour permettre d'effectuer lesdites opérations à distance de ces endroits inaccessibles ou de ces lieux dangereux.

Selon un premier exemple, et plus particulièrement dans une application militaire, la reconnaissance de zones ennemies ou l'exploration de terrains inconnus et accidentés peut s'avérer périlleuse, lesdites zones pouvant être piégées ou surveillées et lesdits terrains pouvant receler des dangers cachés.

Selon un deuxième exemple, et dans une application plus commune, l'inspection de certaines conduites ou canalisations ne peut être effectuée par l'homme en raison des dimensions trop réduites desdites conduites.

Ainsi, on connaît un premier dispositif articulé décrit dans le brevet européen publié sous le numéro EP-1301740.

Ce premier dispositif prend la forme d'un train comprenant plusieurs modules articulés, lesdites articulations étant réalisées par des ressorts, ainsi que des moyens de solidarisation par emboîtement entre lesdits modules.

Afin de pouvoir effectuer divers travaux dans une tuyauterie, il est prévu des câbles permettant de rapprocher les modules pour qu'ils se solidarisent par emboîtement, lesdits câbles rigidifiant et immobilisant ainsi le train de modules dans la tuyauterie.

Selon un premier inconvénient, ce premier dispositif articulé ne comprend pas de moyens permettant de contrôler l'orientation des différents modules entre eux, les articulations entre modules restent libres tant que les câbles ne sont pas tirés et les modules sont guidés par les courbes de la paroi intérieure de la tuyauterie.

Selon un deuxième inconvénient, ce premier dispositif articulé est destiné à être déplacé en le faisant coulisser dans une tuyauterie, il ne comprend pas de moyens de déplacement autonome équipant chaque module.

Il est donc impossible d'utiliser ce premier dispositif articulé pour l'exploration d'une zone ouverte ou d'un terrain en extérieur.

Cependant, on connaît aussi un deuxième dispositif articulé, décrit dans le brevet coréen publié sous la référence KR-100893004, apte à se déplacer sur des terrains accidentés.

A cet effet, ce deuxième dispositif articulé est composé de plusieurs modules reliés entre eux par une liaison articulée, et chaque module est équipé de moyens de déplacement avec au moins une chenille sur chacune de ses quatre faces.

Ainsi, quel que soit le relief de la zone ou du terrain exploré, et étant donné que chaque liaison articulée libère au moins deux degrés de liberté en rotation entre deux modules, au moins une chenille de chaque module est toujours en contact avec la surface dudit relief.

Ce deuxième dispositif articulé est capable de se déplacer aussi bien à la surface d'une zone en relief que dans une tuyauterie. Cependant, il n'est pas prévu de moyens permettant de contrôler de façon précise les mouvements relatifs entre modules.

Aussi, lors du pilotage de ce deuxième dispositif articulé sur une surface accidentée, les positions respectives de chaque module sont sensiblement imposées par le relief.

Cette absence de maîtrise des liaisons entre modules nuit aux capacités de déplacement et de franchissement dudit dispositif : les vitesses de déplacement sont limitées, les changements de direction sont difficiles à effectuer, et le franchissement d'un obstacle relativement abrupt, telle une marche, est quasiment impossible.

Toutefois, dans le domaine de la robotique, on connaît des dispositifs articulés dont les différents modules sont animés par l'intermédiaire de plusieurs servomoteurs électriques, au moins un servomoteur pour contrôler chaque degré de liberté en rotation d'une liaison entre deux modules. Un tel dispositif articulé est par exemple divulgué dans les brevets JP H04 28987 U.

Dans le cas d'un dispositif articulé comprenant une pluralité de modules, plusieurs servomoteurs doivent être commandés électroniquement et alimentés électriquement.

Bien que permettant un contrôle précis des mouvements, et donc des positions, relatifs des modules, ces servomoteurs augmentent le coût de fabrication d'un dispositif articulé, augmentent son poids de manière relativement importante, et ils nécessitent une protection renforcée dans certaines conditions d'utilisation du dispositif articulé car ils peuvent être endommagés par des infiltrations d'eau ou de poussière.

Aussi, la présente invention vise à pallier les inconvénients de l'art antérieur en proposant un dispositif articulé comprenant plusieurs modules dont les mouvements relatifs, et donc les positions, sont pilotés par des moyens robustes, légers et ayant un coût réduit en comparaison des moyens connus tels les servomoteurs.

A cet effet, l'invention a pour objet un dispositif articulé comprenant au moins trois modules consécutifs : un premier module, ou module de tête, au moins un module intermédiaire, et un dernier module, ou module de queue, reliés entre eux par au moins deux articulations, au moins un module comprenant des moyens de déplacement et chaque module intermédiaire étant relié par une première articulation au module précédent et par une deuxième articulation au module suivant, chaque articulation libérant au moins un mouvement en rotation dans un premier plan médian du dispositif articulé autour d'un axe perpendiculaire audit plan, et chaque articulation libérant un deuxième mouvement en rotation dans un deuxième plan médian du dispositif articulé autour d'un axe perpendiculaire audit deuxième plan médian, ledit deuxième plan étant sensiblement perpendiculaire au premier plan médian, le dispositif articulé étant équipé d'un dispositif de pilotage mécanique des mouvements relatifs desdits modules, ce dispositif de pilotage mécanique des mouvements relatifs desdits modules comprenant au moins un dispositif de braquage mécanique permettant au moins d'augmenter ou de réduire l'angle de braquage compris entre le premier module et le dernier module dans le premier plan médian, chaque première articulation entre un module intermédiaire et un module précédent étant réalisée par une pièce de jonction comprenant au moins une liaison pivot d'axe perpendiculaire au premier plan médian avec ledit module, et au moins une liaison pivot d'axe perpendiculaire au deuxième plan médian avec le module suivant, chaque première articulation autorisant un angle d'orientation entre un module intermédiaire et le module précédent dans le premier plan médian, et chaque deuxième articulation autorisant un angle d'orientation entre le module intermédiaire et le module suivant dans le premier plan médian, le dispositif de pilotage mécanique comprenant en outre, pour chaque module intermédiaire un premier dispositif mécanique de report d'orientation dans ledit premier plan médian égalisant l'angle d'orientation autorisé par la première articulation avec l'angle d'orientation autorisé par la deuxième articulation.

D'autres caractéristiques et avantages ressortiront de la description qui va suivre de l'invention, description donnée à titre d'exemple uniquement, en regard des dessins annexés sur lesquels :
- la figure 1 est une vue de dessus schématique dans un premier plan médian d'un dispositif articulé selon l'invention,
- la figure 2 est une vue de côté schématique dans un deuxième plan médian d'un dispositif articulé selon l'invention,
- la figure 3 est une vue schématique d'une articulation reliant deux modules d'un dispositif articulé selon l'invention,
- la figure 4 est une vue de détail d'une articulation dans un mode de réalisation préféré d'un dispositif articulé selon l'invention,
- la figure 5 est une vue de détail de la motorisation des dispositifs mécaniques de braquage et de cabrage d'un dispositif articulé selon l'invention,
- la figure 6 est une vue d'ensemble en perspective d'un dispositif articulé dans un mode de réalisation préféré selon l'invention,
- la figure 7 est une vue d'ensemble en perspective d'un dispositif articulé dans un mode de réalisation minimal selon l'invention.

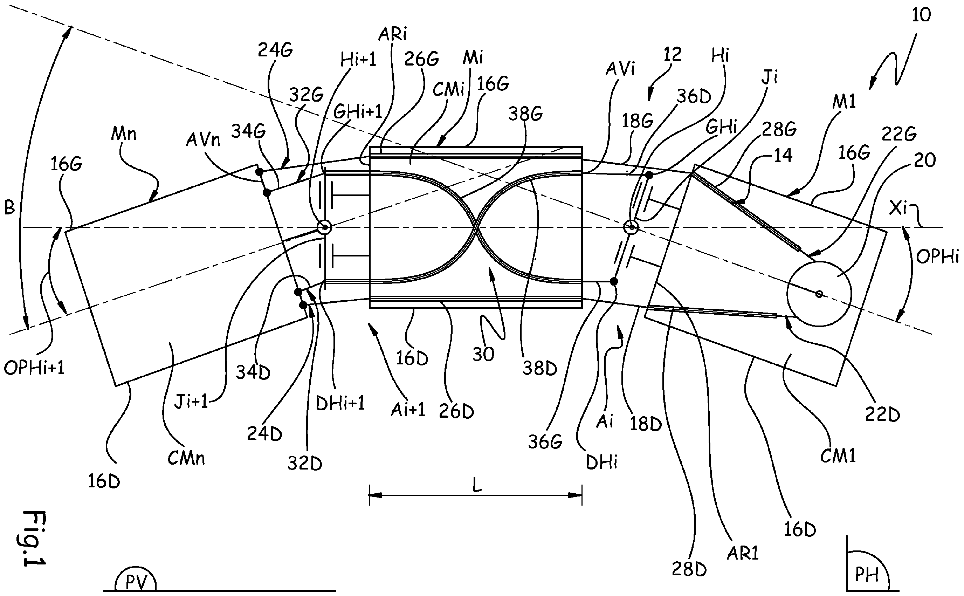

La figure 1 illustre schématiquement une vue de dessus dans un premier plan médian PH d'un dispositif articulé 10 selon l'invention.

Ledit dispositif articulé 10 comprend au moins trois modules M consécutifs : un premier module M1, ou module de tête, au moins un module intermédiaire Mi, et un dernier module Mn, ou module de queue, reliés entre eux par au moins deux articulations Ai et Ai+1.

Plus précisément, quel que soit le nombre n de modules formant le dispositif articulé 10, chaque module intermédiaire Mi est relié par une première articulation Ai au module précédent Mi-1 et par une deuxième articulation Ai+1 au module suivant Mi+1.

Chaque articulation (Ai, Ai+1, ...) libère au moins un mouvement en rotation dans le premier plan médian PH, c'est-à-dire un mouvement en rotation autour d'un axe (Hi, Hi+1, ...) perpendiculaire audit plan PH.

Ainsi, dans le plan PH, chaque articulation Ai autorise un angle d'orientation OPHi entre le module Mi et le module précédent Mi-1, et chaque articulation Ai+1 autorise un angle d'orientation OPHi+1 entre le module Mi et le module suivant Mi+1.

Dans l'exemple représenté, le premier module M1 est le module de tête, le troisième module Mn est le module de queue, et le deuxième module intermédiaire Mi est relié par une première articulation Ai au module précédent Mi-1, soit M1, et par une deuxième articulation Ai+1 au module suivant Mi+1, soit Mn.

Chaque module intermédiaire Mi comprend au moins une face avant AVi et une face arrière ARi, l'articulation Ai reliant la face avant AVi de chaque module Mi à la face arrière ARi-1 du module précédent Mi-1, soit M1 dans l'exemple représenté, et l'articulation Ai+1 reliant la face arrière ARi de chaque module Mi à la face avant AVi+1 du module suivant Mi+1, soit Mn dans le cas représenté.

De plus, dans ledit plan médian PH, chaque module Mi a une longueur L et comprend au moins un premier côté 16G ainsi qu'un deuxième côté 16D opposé audit premier côté.

Afin de contrôler le positionnement et les mouvements relatifs desdits modules les uns par rapport aux autres, ledit dispositif articulé 10 est équipé d'un dispositif de pilotage 12 mécanique desdits mouvements des modules.

Plus précisément, afin de contrôler l'alignement, pouvant être courbe ou rectiligne, du dispositif articulé 10 dans le premier plan médian PH, le dispositif de pilotage 12 comprend un dispositif de braquage 14 mécanique permettant au moins d'augmenter ou de réduire l'angle B de braquage compris entre le premier module M1 et le dernier module Mn dans ledit premier plan médian PH.

Ainsi, la somme des angles d'orientation (OPHi, OPHi+1, ...) entre les modules M est égale à l'angle de braquage B.

Aussi, ledit dispositif de braquage 14 est constitué d'au moins deux câbles 18G et 18D guidés de manière à circuler respectivement au niveau des côtés 16G et 16D de chaque module Mi, et montés en opposition sur un tambour motorisé 20 de façon qu'un desdits câbles 18G ou 18D s'enroule quand l'autre se déroule et vice-versa, ledit tambour 20 étant disposé au niveau d'un module M du dispositif articulé 10.

De préférence et comme représenté, ledit tambour 20 est disposé au niveau du module de tête M1.

Ainsi, une première extrémité 22G, 22D de chaque câble 18G, 18D est fixée audit tambour 20, la deuxième extrémité 24G, 24D de chaque câble 18G, 18D est fixée au dernier module Mn, et lesdits câbles 18G et 18D traversent chaque module intermédiaire Mi dans sa longueur L.

Bien entendu, l'invention couvre aussi les variantes du dispositif de braquage 14 dans lesquelles le tambour 20 est disposé au niveau de tout autre module M que le module de tête M1.

Par exemple, un fonctionnement identique du dispositif de braquage 14 est obtenu avec une variante transposée dans laquelle le tambour 20 est disposé au niveau du module de queue Mn.

De même, un fonctionnement identique du dispositif de braquage 14 est obtenu avec une variante dans laquelle le tambour 20 est disposé au niveau d'un module intermédiaire Mi, les extrémités (22G, 22D) et (24G, 24D) étant dans ce cas respectivement fixées au premier module M1 et au dernier module Mn.

Selon le positionnement du tambour 20 choisi, les extrémités (22G, 22D), et/ou (24G, 24D), sont fixes et bloquées respectivement par rapport à la face arrière AR1 du premier module M1, et/ou par rapport à la face avant AVn du dernier module Mn.

Ensuite, chaque module intermédiaire Mi comprend au moins deux conduits 26G et 26D pour la circulation respective des câbles 18G et 18D.

Selon une première variante préférée, lesdits conduits 26G et 26D sont intégrés dans chaque module intermédiaire Mi.

Ainsi, par exemple, chaque module Mi comprenant un corps CMi, lesdits conduits 26G et 26D peuvent venir de fabrication avec le corps CMi du module intermédiaire Mi ou être usinés dans la masse dudit corps CMi ultérieurement.

Selon une deuxième variante non représentée sur les figures, lesdits conduits 26G et 26D peuvent être constitués par des gaines rapportées sur chaque module Mi et dont les extrémités sont arrêtées au niveau de la face avant AVi et de la face arrière ARi de chaque module Mi.

Toutefois, quel que soit leur mode de réalisation, lesdits conduits 26D et 26G du module intermédiaire Mi sont de longueur sensiblement identique et disposés de manière sensiblement symétrique de part et d'autre de l'axe longitudinal Xi dudit module Mi dans le plan médian PH, cela afin d'obtenir pour un même enroulement des câbles 18G et 18D autour du tambour 20 des rayons de braquage identique de part et d'autre du dispositif articulé 10 dans le plan médian PH.

De plus, chaque conduit 26D, respectivement 26G, débouche du même côté 16D, respectivement 16G, au niveau de la face avant AVi et de la face arrière ARi de chaque module Mi, et de préférence de manière symétrique d'une face à l'autre.

De préférence, lesdits conduits 26G et 26D sont disposés vers l'extérieur du module Mi, à proximité des côtés 16G et 16D, et lesdits conduits 26G et 26D sont de longueur égale à la longueur L dudit module Mi.

Enfin, quel que soit le module M sur lequel est disposé le tambour 20 de braquage, ledit module M, M1 dans le cas représenté, est équipé de conduits 28G et 28D amenant respectivement les câbles 18G et 18D depuis les côtés 16G et 16D et les faces avant AV et/ou arrière AR dudit module vers ledit tambour 20.

Quel que soit le nombre n de modules M, le tambour motorisé 20 du dispositif de braquage 14 contrôle simultanément la longueur des câbles 18G et 18D.

Par conséquent, le dispositif de braquage 14 permet le contrôle de l'angle B de braquage, compris entre le premier module M1 et le dernier module Mn, avec un seul actionneur.

Cette conception du dispositif de braquage permet d'éviter les problèmes de synchronisation pouvant être rencontrés avec des moyens de braquage comprenant un actionneur différent pour chaque câble ou un actionneur différent au niveau de chaque articulation (Ai, Ai+1).

Afin d'homogénéiser les mouvements relatifs des modules M du dispositif articulé 10 dans le plan médian PH, le dispositif de pilotage 12 mécanique comprend, pour chaque module intermédiaire Mi, un premier dispositif mécanique de report d'orientation 30 dans ledit premier plan médian PH permettant d'égaliser l'angle d'orientation OPHi autorisé par l'articulation Ai avec l'angle d'orientation OPHi+1 autorisé par l'articulation Ai+1.

Aussi, au niveau du module intermédiaire Mi, ledit premier dispositif mécanique de report d'orientation 30 est constitué d'au moins deux câbles 32G et 32D guidés de manière à circuler de la face arrière ARi à la face avant AVi dudit module Mi et croisés dans le plan PH, les premières extrémités respectives 34G et 34D des câbles 32G et 32D étant fixées au module Mi+1, soit Mn dans l'exemple représenté, et les deuxièmes extrémités respectives 36G et 36D des câbles 32G et 32D étant sensiblement fixes par rapport au module Mi-1, soit M1 dans le cas représenté.

Plus en détails, la première extrémité 34G du câble 32G est fixée à la face avant AVi+1, soit AVn, du module suivant Mi+1, soit Mn, vers le côté 16G dudit module Mi+1, tandis que la deuxième extrémité 36G dudit câble 32G est fixée en un point DHi sensiblement fixe par rapport à la face arrière ARi-1, soit AR1, du module Mi-1, soit M1, et situé vers le côté 16D dudit module Mi-1.

Et inversement, la première extrémité 34D du câble 32D est fixée à la face avant AVi+1, soit AVn, du module suivant Mi+1, soit Mn, vers le côté 16D dudit module Mi+1, tandis que la deuxième extrémité 36D dudit câble 32D est fixée en un point GHi sensiblement fixe par rapport à la face arrière ARi-1, soit AR1, du module Mi-1, soit M1, et situé vers le côté 16G dudit module Mi-1.

Lesdits câbles 32G et 32D du dispositif de report 30 sont guidés de part en part du module intermédiaire Mi au moins sur sa longueur L.

A cet effet, chaque module intermédiaire Mi comprend au moins deux conduits 38G et 38D croisés dans le plan PH pour la circulation respective des câbles 32G et 32D.

Selon une première variante préférée, lesdits conduits 38G et 38D sont intégrés dans chaque module intermédiaire Mi, lesdits conduits 38G et 38D pouvant venir de fabrication avec le corps CMi du module intermédiaire Mi ou être usinés dans la masse dudit corps CMi ultérieurement.

Selon une deuxième variante non représentée sur les figures, lesdits conduits 38G et 38D peuvent être constitués par des gaines rapportées sur chaque module Mi.

Toutefois, quel que soit leur mode de réalisation, lesdits conduits 38G et 38D du module intermédiaire Mi sont de longueur sensiblement identique et disposés sensiblement symétriquement par rapport à l'axe longitudinal Xi dudit module Mi, cela afin d'obtenir un angle d'orientation OPHi+1 entre le module Mi et le module Mi+1, soit Mn, sensiblement égal à l'angle d'orientation OPHi entre le module Mi-1, soit M1, et le module Mi dans ledit premier plan médian PH.

Pour le croisement des câbles 32G et 32D, le conduit 38G débouche du côté 16G en un point GHi+1 sensiblement fixe par rapport à la face arrière ARi du module Mi et du côté 16D au niveau de la face avant AVi du module Mi, tandis que le conduit 38D débouche du côté 16D en un point DHi+1 sensiblement fixe par rapport à la face arrière ARi du module Mi et du côté 16G au niveau de la face avant AVi du module Mi, lesdits conduits 38D et 38G débouchant de préférence d'une manière symétrique d'une face à l'autre.

De préférence, lesdits conduits 38G et 38D sont disposés vers l'extérieur du module Mi, à proximité des côtés 16G et 16D, et ils sont de longueur supérieure à la longueur L dudit module Mi.

Par conséquent, le dispositif de pilotage 12 comprend autant de premiers dispositifs de report d'orientation 30 que de modules intermédiaires Mi.

La conception du report d'orientation, et donc du contrôle des mouvements relatifs des modules, dans le premier plan PH garantit une bonne fiabilité grâce à un asservissement uniquement mécanique, notamment en comparaison d'un asservissement électronique entre plusieurs actionneurs.

Dans un mode de réalisation préféré et illustré sur la figure 1, le report d'orientation dans le premier plan PH est effectué dans le même sens au niveau de toutes les articulations (Ai, Ai+1, ...).

Cependant, l'invention couvre aussi une variante d'un dispositif de pilotage 12 dans laquelle le report d'orientation est effectué en sens inverse dans le plan PH d'une articulation à une autre car il suffit pour cela de décroiser les conduits (38G, 38D) et les câbles (32G, 32D) de chaque dispositif 30 de report d'orientation au niveau de chaque module Mi. Cette variante pouvant notamment être utilisée pour des dispositifs articulés de type rampant ou ondulant, dits snake-type.

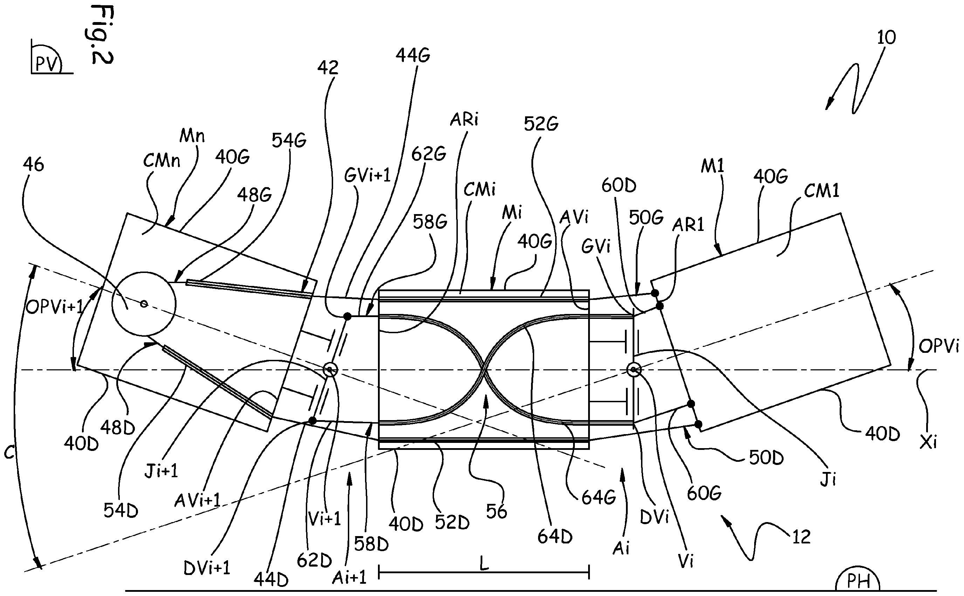

Comme illustré en figure 2, dans un mode de réalisation préféré d'un dispositif articulé 10 selon l'invention, chaque articulation (Ai, Ai+1, ...) libère un deuxième mouvement en rotation dans un deuxième plan médian PV du dispositif articulé 10, ledit plan PV étant sensiblement perpendiculaire au premier plan médian PH.

Chaque articulation (Ai, Ai+1, ...) libère donc un mouvement en rotation autour d'un axe (Vi, Vi+1, ...) perpendiculaire audit deuxième plan médian PV.

Aussi, dans le plan PV, chaque articulation Ai autorise un angle d'orientation OPVi entre le module Mi et le module précédent Mi-1, soit M1 dans l'exemple représenté, et chaque articulation Ai+1 autorise un angle d'orientation OPVi+1 entre le module Mi et le module suivant Mi+1, soit Mn dans le cas représenté.

De plus, dans ledit plan médian PV, chaque module Mi de longueur L comprend aussi un troisième côté 40G ainsi qu'un quatrième côté 40D opposé audit troisième côté.

Afin de contrôler l'alignement, pouvant être courbe ou rectiligne, du dispositif articulé 10 dans le deuxième plan médian PV le dispositif de pilotage 12 comprend un dispositif de cabrage 42 mécanique permettant au moins d'augmenter ou de réduire l'angle C de cabrage compris entre le premier module M1 et le dernier module Mn dans ledit deuxième plan médian PV.

Aussi, la somme des angles d'orientation (OPVi, OPVi+1, ...) entre les modules M est égale à l'angle C de cabrage.

De manière identique au dispositif de braquage 14, ledit dispositif de cabrage 42 est constitué d'au moins deux câbles 44G et 44D guidés de manière à circuler respectivement au niveau des côtés 40G et 40D de chaque module Mi, et montés en opposition sur un tambour motorisé 46 de façon qu'un desdits câbles 44G ou 44D s'enroule quand l'autre se déroule et vice-versa, ledit tambour 46 étant disposé au niveau d'un module M du dispositif articulé 10.

De préférence et comme représenté en figure 2, ledit tambour 46 est disposé au niveau du module de queue Mn.

Ainsi, une première extrémité 48G, 48D de chaque câble 40G, 40D est fixée audit tambour 46, la deuxième extrémité 50G, 50D de chaque câble 40G, 40D est fixée au premier module M1, et lesdits câbles 40G, 40D traversent chaque module intermédiaire Mi dans sa longueur L.

Bien entendu, l'invention couvre aussi les variantes du dispositif de cabrage 42 dans lesquelles le tambour 46 est disposé au niveau de tout autre module M que le module de queue Mn, notamment une variante transposée dans laquelle le tambour 46 est disposé au niveau du module de tête M1, ou aussi une variante dans laquelle le tambour 20 est disposé au niveau d'un module intermédiaire Mi, les extrémités (48G, 48D) et (50G, 50D) étant dans ce cas respectivement fixées au dernier module Mn et au premier module M1.

Selon le positionnement du tambour 46 choisi, les extrémités (48G, 48D), et/ou (50G, 50D), sont fixes et bloquées respectivement par rapport à la face arrière AR1 du premier module M1, et/ou par rapport à la face avant AVn du dernier module Mn.

Ensuite, chaque module intermédiaire Mi comprend au moins deux conduits 526 et 52D pour la circulation respective des câbles 44G et 44D.

Selon une première variante préférée, lesdits conduits 526 et 52D sont intégrés dans chaque module intermédiaire Mi.

Ainsi, par exemple, lesdits conduits 52G et 52D peuvent venir de fabrication avec le corps CMi du module intermédiaire Mi ou être usinés dans la masse dudit corps CMi ultérieurement.

Selon une deuxième variante non représentée sur les figures, lesdits conduits 52G et 52D peuvent être constitués par des gaines rapportées sur chaque module Mi et dont les extrémités sont arrêtées au niveau de la face avant AVi et de la face arrière ARi de chaque module Mi.

Toutefois, quel que soit leur mode de réalisation, lesdits conduits 52G et 52D du module intermédiaire Mi sont sensiblement de longueur identique et disposés de manière sensiblement symétrique de part et d'autre de l'axe longitudinal Xi dudit module Mi, cela afin d'obtenir pour un même enroulement des câbles 44G et 44D autour du tambour 46 des rayons de cabrage identique de part et d'autre du dispositif articulé 10 dans le plan médian PV.

De plus, chaque conduit 52D, respectivement 52G, débouche du même côté 40D, respectivement 40G, au niveau de la face avant AVi et de la face arrière ARi de chaque module Mi, et de préférence de manière symétrique d'une face à l'autre.

De préférence, lesdits conduits 52G et 52D sont disposés vers l'extérieur du module Mi, à proximité des côtés 40G et 40D, et lesdits conduits 52G et 52D sont de longueur égale à la longueur L dudit module Mi.

Enfin, quel que soit le module M sur lequel est disposé le tambour 46 de cabrage, ledit module M, Mn dans le cas représenté, est équipé de conduits 546 et 54D amenant respectivement les câbles 44G et 44D depuis les côtés (40G, 40D) et les faces avant AV et/ou arrière AR dudit module M vers ledit tambour 46.

Quel que soit le nombre n de modules M, le tambour motorisé 46 du dispositif de cabrage 42 contrôle simultanément la longueur des câbles 44G et 44D.

Par conséquent, le dispositif de cabrage 42 permet le contrôle de l'angle C de cabrage avec un seul actionneur, cette conception du dispositif de cabrage 42 permettant d'éviter les problèmes de synchronisation entre différents actionneurs.

Afin d'homogénéiser les mouvements relatifs des modules M du dispositif articulé 10 dans le plan médian PV, le dispositif de pilotage 12 mécanique comprend, pour chaque module intermédiaire Mi, un deuxième dispositif mécanique de report d'orientation 56 dans ledit deuxième plan médian PV permettant d'égaliser l'angle d'orientation OPVi autorisé par l'articulation Ai avec l'angle d'orientation OPVi+1 autorisé par l'articulation Ai+1.

Aussi, au niveau du module intermédiaire Mi, ledit deuxième dispositif mécanique de report d'orientation 56 est constitué d'au moins deux câbles 58G et 58D guidés de manière à circuler de la face arrière ARi à la face avant AVi dudit module Mi et croisés dans le plan PV, les premières extrémités respectives 60G et 60D des câbles 58G et 58D étant fixées au module Mi-1, soit M1 dans l'exemple représenté, et les deuxièmes extrémités respectives 62G et 62D des câbles 58G et 58D étant sensiblement fixes par rapport au module Mi+1, soit Mn dans le cas représenté.

Plus en détails, la première extrémité 60G du câble 58G est fixée à la face arrière ARi-1, soit AR1, du module précédent Mi-1, soit M1, vers le côté 40D dudit module Mi-1, tandis que la deuxième extrémité 62G dudit câble 58G est fixée en un point GVi+1 sensiblement fixe par rapport à la face avant AVi+1, soit AVn, du module Mi+1, soit Mn, et situé vers le côté 40G dudit module Mi+1.

Et inversement, la première extrémité 60D du câble 58D est fixée à la face arrière ARi-1, soit AV1, du module précédent Mi-1, soit M1, vers le côté 40G dudit module Mi-1, tandis que la deuxième extrémité 62D dudit câble 58D est fixée en un point DVi+1 sensiblement fixe par rapport à la face avant AVi+1, soit AVn, du module Mi+1, soit Mn, et situé vers le côté 40D dudit module Mi+1.

Lesdits câbles 58G et 58D du dispositif de report 56 sont guidés de part en part du module intermédiaire Mi au moins sur sa longueur L.

A cet effet, chaque module intermédiaire Mi comprend au moins deux conduits 64G et 64D croisés dans la plan PV pour la circulation respective des câbles 58G et 58D.

Selon une première variante préférée, lesdits conduits 64G et 64D sont intégrés dans chaque module intermédiaire Mi, lesdits conduits 64G et 64D pouvant venir de fabrication avec le corps CMi du module intermédiaire Mi ou être usinés dans la masse dudit corps CMi ultérieurement.

Selon une deuxième variante non représentée sur les figures, lesdits conduits 64G et 64D peuvent être constitués par des gaines rapportées sur chaque module Mi.

Toutefois, quel que soit leur mode de réalisation, lesdits conduits 64G et 64D du module intermédiaire Mi sont de longueur sensiblement identique et disposés sensiblement symétriquement par rapport à l'axe longitudinal Xi dudit module Mi, cela afin d'obtenir un angle d'orientation OPVi+1 entre le module Mi et le module Mi+1, soit Mn, sensiblement égal à l'angle d'orientation OPVi entre le module Mi-1, soit M1, et le module Mi dans ledit deuxième plan médian PV.

Pour le croisement des câbles 58G et 58D, le conduit 64D débouche du côté 40G en un point GVi sensiblement fixe par rapport à la face avant AVi du module Mi et du côté 40D au niveau de la face arrière ARi du module Mi, tandis que le conduit 64G débouche du côté 40D en un point DVi sensiblement fixe par rapport à la face avant AVi du module Mi et du côté 40G au niveau de la face arrière ARi du module Mi, lesdits conduits 64D et 64G débouchant de préférence d'une manière symétrique d'une face à l'autre.

De préférence, lesdits conduits 64G et 64D sont disposés vers l'extérieur du module Mi, à proximité des côtés 40G et 40D, et ils sont de longueur supérieure à la longueur L dudit module Mi.

Par conséquent, le dispositif de pilotage 12 comprend autant de deuxièmes dispositifs de report d'orientation 56 que de modules intermédiaires Mi.

La conception du report d'orientation, et donc du contrôle des mouvements relatifs des modules, dans le premier plan PV, tout comme dans le plan PH, garantit une bonne fiabilité grâce à un asservissement uniquement mécanique, notamment en comparaison d'un asservissement électronique entre plusieurs actionneurs.

Dans un mode de réalisation préféré et illustré sur la figure 2, le report d'orientation dans le premier plan PV est effectué dans le même sens au niveau de toutes les articulations (Ai, Ai+1, ...).

Cependant, l'invention couvre aussi une variante d'un dispositif de pilotage 12 dans laquelle le report d'orientation est effectué en sens inverse dans le plan PV d'une articulation à une autre car il suffit pour cela de décroiser les conduits (64G, 64D) et les câbles (58G, 58D) de chaque dispositif 56 de report d'orientation au niveau de chaque module Mi. Cette variante pouvant notamment être utilisée pour des dispositifs articulés de type rampant ou ondulant, dits snake-type.

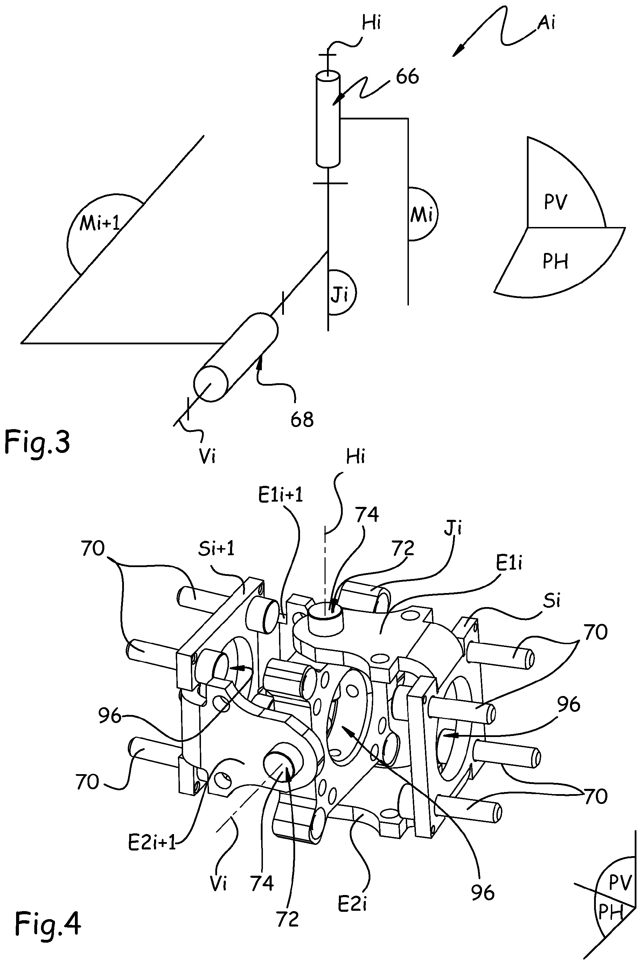

Selon l'invention, et comme illustré schématiquement en figure 3, chaque articulation (Ai, Ai+1, ...) libère au moins un mouvement en rotation dans le premier plan médian PH autour d'un axe (Hi, Hi+1, ...) perpendiculaire audit plan PH, ainsi qu'un deuxième mouvement en rotation dans un deuxième plan médian PV autour d'un axe (Vi, Vi+1, ...) perpendiculaire audit deuxième plan médian PV.

A cet effet, chaque articulation Ai entre un module Mi et un module Mi+1 est réalisée par une pièce de jonction Ji comprenant au moins une liaison pivot 66 d'axe Hi avec le module Mi et au moins une liaison pivot 68 d'axe Vi avec le module Mi+1.

Dans un mode de réalisation préféré et illustré en figure 4, une articulation Ai comprend la pièce de jonction Ji accouplée à deux supports Si et Si+1 destiné à être rapportés respectivement sur les modules Mi et Mi+1 par tous moyens appropriés et connus de l'homme du métier, tels des vis 70.

Lesdits supports Si et Si+1 sont sensiblement identiques et comprennent chacun deux extensions latérales Eli,E2i et E1i+1,E2i+1 formant un U pour la réception de la pièce de jonction Ji, lesdits supports Si et Si+1 étant montés avec leurs extensions en vis à vis de manière à enserrer la pièce de jonction Ji et inclinés d'un quart de tour l'un par rapport à l'autre.

Lesdites extensions latérales Eli,E2i et E1i+1,E2i+1 comprennent des moyens de liaison 72 avec la pièce de jonction Ji libérant respectivement un mouvement en rotation autour des axes Hi et Vi.

A titre d'exemple, lesdits moyens de liaison 72 peuvent être constitués d'axes 74 solidarisés à la pièce de jonction Ji et libres en rotation dans des alésages réalisés dans lesdites extensions latérales Eli,E2i et Eli+1,E2i+1.

Enfin, comme illustré sur les figures 1 et 2, les points GHi,DHi dans le plan PH où sont fixés les deuxièmes extrémités 36D,36G des câbles 32D,32G, les points GHi+1, DHi+1 dans le plan PH où débouchent les conduits 38G et 38D, ainsi que les points GVi+1,DVi+1 dans le plan PV où sont fixés les deuxièmes extrémités 62G,62D des câbles 58G,58D, et les points GVi,DVi dans le plan PV où débouchent les conduits 64G,64D se situent sur les pièces de jonction Ji et Ji+1.

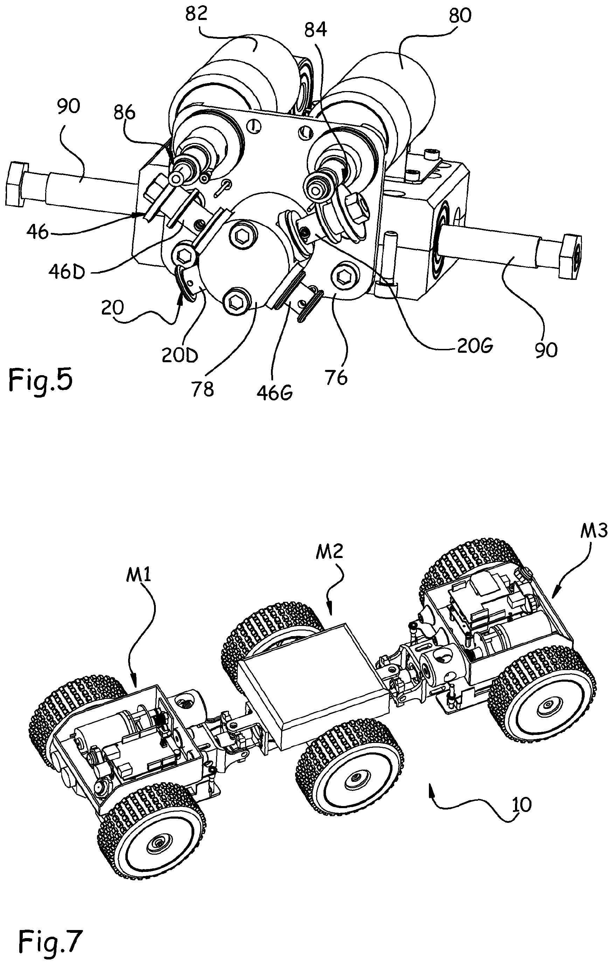

Dans un mode de réalisation de l'invention illustré par la figure 5, les tambours 20 et 46 du dispositif de braquage 14 et du dispositif de cabrage 42 sont rapportés sur un même module M, à savoir le module de tête M1 ou le module de queue Mn, par l'intermédiaire d'au moins une plaque 76 supportant chacun des tambours 20 et 46 par un appendice 78, lesdits tambours 20 et 46 étant montés libres en rotation par rapport audit appendice.

De préférence, chacun des tambours 20 et 46 se décompose respectivement en deux enrouleurs 20D, 20G et 46D, 46G, l'enrouleur 20D recevant le câble 18D, l'enrouleur 20G recevant le câble 18G, l'enrouleur 46D recevant le câble 44D, et l'enrouleur 46G recevant le câble 44G.

Aussi, chacun des tambours 20 et 46 est muni d'une motorisation 80 et 82 les entraînant de préférence par l'intermédiaire d'un engrenage 84 et 86 avec un rapport de démultiplication adapté ou par tout autre transmission connue de l'homme du métier.

Dans un mode de réalisation préféré de l'invention, les modules M sont de conception sensiblement identique et ont donc une longueur L sensiblement identique.

De préférence, le premier plan médian PH correspond sensiblement à un plan horizontal, et le deuxième plan médian PV correspond sensiblement à un plan vertical.

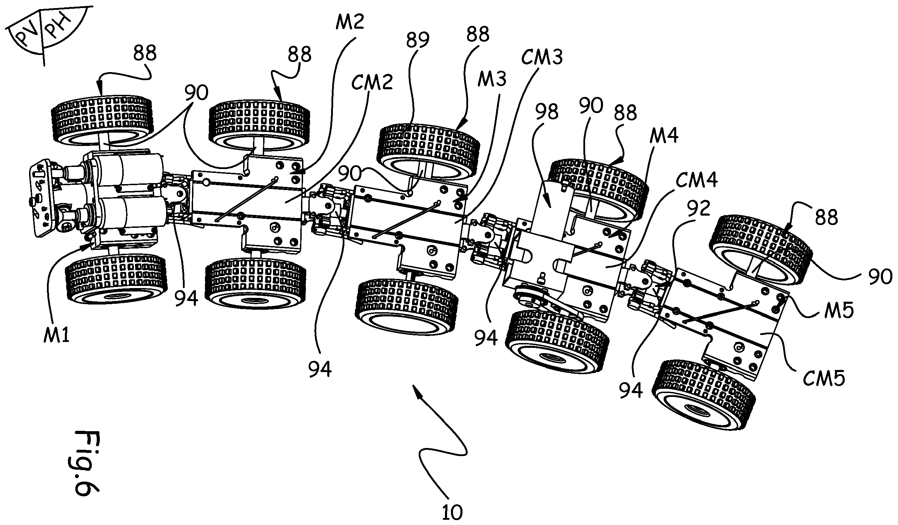

Comme illustré sur la figure 6, le corps CM de chaque module M peut être réalisé dans la masse, et les conduits (26G,26D,28G,28D) du dispositif de braquage 14, les conduits (38G,38D) du premier dispositif de report d'orientation 30, les conduits (52G,52D,54G,54D) du dispositif de cabrage 42, et les conduits (64G,64D) du deuxième dispositif de report d'orientation 56 peuvent être réalisés à l'aide de perçages, d'alésages, de rainures, et de toute autre forme d'usinage, réalisés dans ledit corps CM des modules M.

De préférence, les câbles (18G,18D) du dispositif de braquage 14, les câbles (32G,32D) du premier dispositif de report d'orientation 30, les câbles (44G,44D) du dispositif de cabrage 42, et les câbles (58G,58D) du deuxième dispositif de report d'orientation 56 sont non extensibles et réalisés dans un matériau résistant à l'usure et au frottement.

Dans une variante optimisée de réalisation du dispositif de pilotage 12 mécanique, les câbles (18G,18D) et les conduits (26G,26D) du dispositif de braquage 14 sont décalés dans le deuxième plan médian PV, et les câbles (44G,44D) et les conduits (52G,52D) du dispositif de cabrage 42 sont décalés dans le premier plan médian PH.

Dans cette variante optimisée, l'enroulement/déroulement des câbles (18G,18D) modifie simultanément l'angle de braquage B dans le premier plan médian PH et l'angle de cabrage C dans le deuxième plan médian PV, et l'enroulement/déroulement des câbles (44G,44D) modifie aussi simultanément l'angle de braquage B dans le premier plan médian PH et l'angle de cabrage C dans le deuxième plan médian PV.

Cette inclinaison des dispositifs de braquage 14 et de cabrage 42 par rapport aux premier et deuxième plans médians PH et PV permet avantageusement de répartir la puissance nécessaire, et donc utilisée, pour obtenir le braquage ou le cabrage du dispositif articulé 10 entre les deux motorisations 80 et 82 desdits dispositifs de braquage 14 et de cabrage 42.

Cette configuration autorise un dimensionnement à la baisse desdites motorisations et donc un encombrement et un coût réduit.

Enfin, comme illustré en figure 5, dans cette variante optimisée, les tambours 20 et 46 du dispositif de braquage 14 et du dispositif de cabrage 42 sont eux aussi inclinés par rapport aux premier et deuxième plans médians PH et PV.

Selon l'invention, au moins un module M du dispositif articulé 10 comprend des moyens de déplacement 88 permettant audit dispositif articulé 10 de se déplacer de manière autonome sur une surface ou dans une canalisation, lesdits moyens de déplacement 88 étant adaptés au milieu ou à l'environnement dans lequel le dispositif articulé 10 doit évoluer.

Dans un mode de réalisation, tel que celui illustré en figure 6, le dispositif articulé 10 comprend 5 modules (M1,M2,M3,M4,M5) et chaque module M comprend de tels moyens de déplacement 88.

Ces moyens de déplacement 88 peuvent par exemple prendre la forme de roues 89 et d'essieux 90, mais ils peuvent aussi être remplacés par tout autre moyen connu de l'homme du métier et plus adapté à certains milieux, tels des pattes, des chenilles, ...
De préférence, ces moyens de déplacement 88 comprennent une transmission commune 92 prenant la forme d'un arbre de transmission 94 équipant chaque module M.

Chaque arbre de transmission 94 traverse le corps CM du module M dans sa longueur L, un logement étant prévu dans ledit corps pour son passage.

De plus, lesdits arbres de transmission 94 sont reliés au niveau de chaque articulation Ai entre deux modules M par un joint de cardan.

A cet effet, comme illustré en figure 4, chaque articulation Ai est prévue avec un passage central 96 traversant les supports Si et Si+1 ainsi que la pièce de jonction Ji et permettant l'accouplement desdits arbres de transmission.

Bien entendu, la transmission commune 92 est entraînée en rotation par une motorisation 98, pouvant comprendre un ou plusieurs moteurs, disposée sur l'un des modules M du dispositif 10, de préférence un des modules intermédiaires Mi, un engrenage ou un dispositif à poulies et courroie pouvant être intercalé entre ladite motorisation 98 et ladite transmission commune 92 pour adapter ou faire varier le rapport de démultiplication.

Tout comme pour le fonctionnement du dispositif de braquage 14 et du dispositif de cabrage 42, on constate que le fonctionnement des moyens de déplacement 88 est avantageusement lié à un seul actionneur.

Aussi, le fonctionnement de la motorisation 98, des moyens de déplacement 88, de la motorisation 80 du dispositif de braquage 14 et de la motorisation 82 du dispositif de cabrage 42 est piloté par des moyens de commande adaptés et de préférence communicants à distance avec un dispositif de contrôle.

De plus, afin de permettre la réalisation de différentes opérations ou travaux dans une zone explorée ou dans une tuyauterie inspectée avec le présent dispositif articulé 10, au moins un module peut être équipé d'outils adaptés, comme par exemple un bras manipulateur, un dispositif de prélèvement d'échantillons, un dispositif d'instrumentation tel un télémètre, un hydromètre, ou un dispositif de mesure d'un paramètre de l'environnement du dispositif articulé, ...
De la même manière, toute sorte d'équipements peuvent être rajoutés au dispositif articulé 10 au niveau d'un ou plusieurs modules M pour faciliter son pilotage et ses déplacements sur une surface accidentée, parsemée d'obstacles ou dans une canalisation quelconque.

Ces équipements peuvent d'abord consister en différents capteurs de position, tels des roues libres, destinés à mesurer la position et l'état de traction des différents câbles du dispositif de pilotage mécanique 12, et informant les moyens de commande des motorisations et/ou le dispositif de contrôle à distance dudit dispositif articulé.

Ces équipements peuvent aussi consister en différents capteurs, de proximité, de choc, en des moyens de capture d'images, ..., permettant de renvoyer des informations sur l'environnement exploré ou inspecté aux moyens de commande des motorisations et/ou au dispositif de contrôle à distance dudit dispositif articulé.

Pour donner un ordre d'idées et de façon non limitative, en se braquant ou se cabrant comme illustré en figure 1 ou 2, et dans un mode de réalisation à cinq modules M tel qu'illustré en figure 6, les dispositifs de braquage 14 et de cabrage 42 peuvent autoriser des angles de braquage B et de cabrage C allant jusqu'à 160° entre le module M1 et le module M5.

Toujours dans cette configuration à cinq modules, pour une longueur totale Ltot, le dispositif articulé 10 peut franchir des obstacles d'une hauteur H sensiblement comprise entre 35 et 40% de Ltot.

Enfin, la figure 7 représente un mode de réalisation minimal d'un dispositif articulé à 3 modules M1, M2 et M3, particulièrement adapté à l'exploration de conduites étroites ou de terrains très accidentés.

## Revendications

1. Dispositif articulé (10) comprenant au moins trois modules (M) consécutifs : un premier module (M1), ou module de tête, au moins un module intermédiaire (Mi), et un dernier module (Mn), ou module de queue, reliés entre eux par au moins deux articulations (Ai) et (Ai+1), au moins un module (M) comprenant des moyens de déplacement (88) et chaque module intermédiaire (Mi) étant relié par une première articulation (Ai) au module précédent (Mi-1) et par une deuxième articulation (Ai+1) au module suivant (Mi+1), chaque articulation (Ai, Ai+1, ...) libérant au moins un mouvement en rotation dans un premier plan médian (PH) du dispositif articulé (10) autour d'un axe (Hi, Hi+1, ...) perpendiculaire audit plan (PH), et chaque articulation (Ai, Ai+1, ...) libérant un deuxième mouvement en rotation dans un deuxième plan médian (PV) du dispositif articulé (10) autour d'un axe (Vi, Vi+1, ...) perpendiculaire audit deuxième plan médian (PV), ledit deuxième plan médian (PV) étant sensiblement perpendiculaire au premier plan médian (PH), le dispositif articulé (10) étant équipé d'un dispositif de pilotage (12) mécanique des mouvements relatifs desdits modules, ce dispositif de pilotage comprenant au moins un dispositif de braquage (14) mécanique permettant au moins d'augmenter ou de réduire l'angle (B) de braquage compris entre le premier module (M1) et le dernier module (Mn) dans le premier plan médian (PH), chaque première articulation (Ai) entre un module intermédiaire (Mi) et un module suivant (Mi+1) étant réalisée par une pièce de jonction (Ji) comprenant au moins une liaison pivot (66) d'axe (Hi) perpendiculaire au premier plan (PH) avec le module intermédiaire (Mi), et au moins une liaison pivot (68) d'axe (Vi) perpendiculaire au deuxième plan (PH) avec le module suivant (Mi+1), chaque première articulation (Ai) autorisant un angle d'orientation (OPHi) entre le module intermédiaire (Mi) et le module précédent (Mi-1) dans le premier plan médian (PH), et chaque deuxième articulation (Ai+1) autorisant un angle d'orientation (OPHi+1) entre le module intermédiaire (Mi) et le module suivant (Mi+1) dans le premier plan médian (PH), caractérisé en que le dispositif de pilotage (12) mécanique comprend, pour chaque module intermédiaire (Mi), un premier dispositif mécanique de report d'orientation (30) dans ledit premier plan médian (PH) égalisant l'angle d'orientation (OPHi) autorisé par la première articulation (Ai) avec l'angle d'orientation (OPHi+1) autorisé par la deuxième articulation (Ai+1).

2. Dispositif articulé (10) selon la revendication 1, **caractérisé en ce que** ledit premier dispositif mécanique de report d'orientation (30) est constitué d'au moins deux câbles (32G) et (32D) circulant de la face arrière (ARi) à la face avant (AVi) dudit module intermédiaire (Mi) et croisés dans le premier plan médian (PH), les premières extrémités respectives (34G) et (34D) des câbles (32G) et (32D) étant fixées au module suivant (Mi+1), et les deuxièmes extrémités respectives (36G) et (36D) des câbles (32G) et (32D) étant sensiblement fixes par rapport au module précédent (Mi-1).

3. Dispositif articulé (10) selon la revendication 1 ou 2, **caractérisé en ce que** chaque module intermédiaire (Mi) comprend au moins deux conduits (38G) et (38D) croisés dans le premier plan médian (PH) pour la circulation respective des câbles (32G) et (32D), lesdits conduits (38G) et (38D) étant de longueur sensiblement identique et disposés sensiblement symétriquement par rapport à l'axe longitudinal (Xi) dudit module intermédiaire (Mi).

4. Dispositif articulé (10) selon la revendication 1, 2 ou 3, chaque module intermédiaire (Mi) comprenant dans le premier plan médian (PH) au moins un premier côté (16G) ainsi qu'un deuxième côté (16D) opposé audit premier côté, **caractérisé en ce que** ledit dispositif de braquage (14) est constitué d'au moins deux câbles (18G) et (18D) circulant respectivement au niveau des côtés (16G) et (16D) de chaque module intermédiaire (Mi), et montés en opposition sur un tambour motorisé (20) de façon qu'un desdits câbles (18G) ou (18D) s'enroule quand l'autre se déroule et vice-versa.

5. Dispositif articulé (10) selon la revendication 4, **caractérisé en ce que** chaque module intermédiaire (Mi) comprend au moins deux conduits (26G) et (26D) pour la circulation respective des câbles (18G) et (18D), lesdits conduits (26D) et (26G) étant de longueur sensiblement identique et disposés de manière sensiblement symétrique de part et d'autre de l'axe longitudinal (Xi) dudit module intermédiaire (Mi) dans le premier plan médian (PH).

6. Dispositif articulé (10) selon l'une des revendications 1 à 5, **caractérisé en ce que** le dispositif de pilotage (12) comprend un dispositif de cabrage (42) mécanique permettant au moins d'augmenter ou de réduire l'angle (C) de cabrage compris entre le premier module (M1) et le dernier module (Mn) dans ledit deuxième plan médian (PV).

7. Dispositif articulé (10) selon la revendication 6, chaque module intermédiaire (Mi) comprenant dans ledit deuxième plan médian (PV) un troisième côté (40G) ainsi qu'un quatrième côté (40D) opposé audit troisième côté, **caractérisé en ce que** ledit dispositif de cabrage (42) est constitué d'au moins deux câbles (44G) et (44D) circulant respectivement au niveau des troisième et quatrième côtés (40G) et (40D) de chaque module intermédiaire (Mi), et montés en opposition sur un tambour motorisé (46) de façon qu'un desdits câbles (44G) ou (44D) s'enroule quand l'autre se déroule et vice-versa.

8. Dispositif articulé (10) selon la revendication 7, **caractérisé en ce que** chaque module intermédiaire (Mi) comprend au moins deux conduits (52G) et (52D) pour la circulation respective des câbles (44G) et (44D), lesdits conduits (52G) et (52D) étant sensiblement de longueur identique et disposés de manière sensiblement symétrique de part et d'autre de l'axe longitudinal (Xi) dudit module intermédiaire (Mi).

9. Dispositif articulé (10) selon l'une des revendications 6 à 8, chaque première articulation (Ai) autorisant un angle d'orientation (OPVi) entre un module intermédiaire (Mi) et le module précédent (Mi-1) dans le deuxième plan médian (PV), et chaque deuxième articulation (Ai+1) autorisant un angle d'orientation (OPVi+1) entre le module intermédiaire (Mi) et le module suivant (Mi+1) dans le plan (PV), **caractérisé en ce que** le dispositif de pilotage (12) mécanique comprend, pour chaque module intermédiaire (Mi), un deuxième dispositif mécanique de report d'orientation (56) dans ledit deuxième plan médian (PV) égalisant l'angle d'orientation (OPVi) autorisé par la première articulation (Ai) avec l'angle d'orientation (OPVi+1) autorisé par la deuxième articulation (Ai+1).

10. Dispositif articulé (10) selon la revendication 9, **caractérisé en ce que** ledit deuxième dispositif mécanique de report d'orientation (56) est constitué d'au moins deux câbles (58G) et (58D) circulant de la face arrière (ARi) à la face avant (AVi) dudit module intermédiaire (Mi) et croisés dans le deuxième plan médian (PV), les premières extrémités respectives (60G) et (60D) des câbles (58G) et (58D) étant fixées au module précédent (Mi-1), et les deuxièmes extrémités respectives (62G) et (62D) des câbles (58G) et (58D) étant sensiblement fixes par rapport au module suivant (Mi+1).

11. Dispositif articulé (10) selon la revendication 10, **caractérisé en ce que** chaque module intermédiaire (Mi) comprend au moins deux conduits (64G) et (64D) croisés dans le deuxième plan médian (PV) pour la circulation respective des câbles (58G) et (58D), lesdits conduits (64G) et (64D) étant de longueur sensiblement identique et disposés sensiblement symétriquement par rapport à l'axe longitudinal (Xi) dudit module intermédaire (Mi).

12. Dispositif articulé (10) selon l'une des revendications 1 à 11, **caractérisé en ce que** chaque module (M) comprend des moyens de déplacement (88) avec une transmission commune (92).

## Patentansprüche

1. Gelenkvorrichtung (10) mit wenigstens drei aufeinanderfolgenden Modulen (M): einem ersten Modul (M1), oder Kopfmodul, wenigstens einem Zwischenmodul (Mi) und einem letzten Modul (Mn), oder Endmodul, die untereinander durch wenigstens zwei Gelenke (Ai) und (Ai+1) verbunden sind, wobei wenigstens ein Modul (M) Fortbewegungsmittel (88) aufweist und jedes Zwischenmodul (Mi) durch ein erstes Gelenk (Ai) mit dem vorhergehenden Modul (Mi-1) und durch ein zweites Gelenk (Ai+1) mit dem folgenden Modul (Mi+1) verbunden ist, wobei jedes Gelenk (Ai, Ai+1, ...) wenigstens eine Drehbewegung in einer ersten Mittelebene (PH) der Gelenkvorrichtung (10) um eine Achse (Hi, Hi+1, ...) im rechten Winkel zur besagten Ebene (PH) ermöglicht und jedes Gelenk (Ai, Ai+1, ...) eine zweite Drehbewegung in einer zweiten Mittelebene (PV) der Gelenkvorrichtung (10) um eine Achse (Vi, Vi+1, ...) im rechten Winkel zur besagten zweiten Mittelebene (PV) ermöglicht, wobei die zweite Mittelebene (PV) im Wesentlichen im rechten Winkel zur ersten Mittelebene (PH) ausgerichtet ist und die Gelenkvorrichtung (10) mit einer mechanischen Führungsvorrichtung (12) für die Relativbewegungen der besagten Module versehen ist, wobei die Führungsvorrichtung wenigstens eine mechanische Auslenkvorrichtung (14) aufweist, die es wenigstens gestattet, den Auslenkwinkel (B) zwischen dem ersten Modul (M1) und dem letzten Modul (Mn) in der ersten Mittelebene (PH) zu vergrößern oder zu verringern, wobei jedes erste Gelenk (Ai) zwischen einem Zwischenmodul (Mi) und einem nachfolgenden Modul (Mi+1) durch ein Verbindungsstück (Ji) bewerkstelligt ist, das wenigstens eine Schwenkverbindung (66) um die Achse (Hi) im rechten Winkel zur ersten Ebene (PH) mit dem Zwischenmodul (Mi) aufweist, und das wenigstens eine Schwenkverbindung (68) um die Achse (Vi) im rechten Winkel zur zweiten Ebene (PH) mit dem nachfolgenden Modul (Mi+1) aufweist, wobei jedes erste Gelenk (Ai) einen Ausrichtwinkel (OPHi) zwischen dem Zwischenmodul (Mi) und dem vorhergehenden Modul (Mi-1) in der ersten Mittelebene (PH) zulässt und jedes zweite Gelenk (Ai+1) einen Ausrichtwinkel (OPHi+1) zwischen dem Zwischenmodul (Mi) und dem nachfolgenden Modul (Mi+1) in der ersten Mittelebene (PH) zulässt, **dadurch gekennzeichnet, dass** die mechanische Führungsvorrichtung (12) für jedes Zwischenmodul (Mi) eine erste mechanische Vorrichtung (30) zum Ausgleich der Ausrichtung in der ersten Mittelebene (PH) aufweist, die den vom ersten Gelenk (Ai) zugelassenen Ausrichtwinkel (OPHi) und den durch das zweite Gelenk (Ai+1) zugelassenen Ausrichtwinkel (OPHi+1) ausgleicht.

2. Gelenkvorrichtung (10) nach Anspruch 1, **dadurch gekennzeichnet, dass** die erste mechanische Vorrichtung (30) für den Ausgleich der Ausrichtung von wenigstens zwei Kabeln (32G) und (32D) gebildet ist, die von der Rückseite (ARi) zur Vorderseite (AVi) des Zwischenmoduls (Mi) verlaufen und sich in der ersten Mittelebene (PH) überkreuzen, wobei die jeweiligen ersten Enden (34G) und (34D) der Kabel (32G) und (32D) am nachfolgenden Modul (Mi+1) befestigt sind und die jeweiligen zweiten Enden (36G) und (36D) der Kabel (32G) und (32D) im Wesentlichen mit Bezug zum vorhergehenden Modul (Mi-1) befestigt sind.

3. Gelenkvorrichtung (10) nach Anspruch 1 oder 2, **dadurch gekennzeichnet, dass** jedes Zwischenmodul (Mi) wenigstens zwei in der ersten Mittelebene (PH) überkreuzte Kanäle (38G) und (38D) für den jeweiligen Verlauf der Kabel (32G) und (32D) aufweist, wobei die Kanäle (38G) und (38D) im Wesentlichen von der gleichen Länge sind und im Wesentlichen symmetrisch bezüglich der Längsachse (Xi) des mittleren Moduls (Mi) angeordnet sind.

4. Gelenkvorrichtung (10) nach Anspruch 1,2 oder 3, bei der jedes Zwischenmodul (Mi) in der ersten Mittelebene (PH) wenigstens eine erste Seite (16G) ebenso wie eine der ersten Seite entgegengesetzte zweite Seite (16D) aufweist, **dadurch gekennzeichnet, dass** die Auslenkvorrichtung (14) von wenigstens zwei Kabeln (18G) und (18D) gebildet ist, die jeweils im Bereich der Seiten (16G) und (16D) des jeweiligen Zwischenmoduls (Mi) verlaufen und entgegengesetzt an einer motorisierten Trommel (20) derart angebracht sind, dass sich eines der Kabel (18G) oder (18D) aufwickelt, wenn sich das andere abwickelt, und umgekehrt.

5. Gelenkvorrichtung (10) nach Anspruch 4, **dadurch gekennzeichnet, dass** jedes Zwischenmodul (Mi) wenigstens zwei Kanäle (26G) und (26D) für den jeweiligen Verlauf der Kabel (18G) und (18D) aufweist, wobei die Kanäle (26D) und (26G) von im Wesentlichen identischer Länge sind und auf im Wesentlichen symmetrische Weise beidseits der Längsachse (Xi) des Zwischenmoduls (Mi) in der ersten mittleren Mittelebene (PH) angeordnet sind.

6. Gelenkvorrichtung (10) nach einem der Ansprüche 1 bis 5, **dadurch gekennzeichnet, dass** die Führungsvorrichtung (12) eine mechanische Aufrichtvorrichtung (42) aufweist, die es wenigstens gestattet, den Aufrichtwinkel (C) zwischen dem ersten Modul (M1) und dem letzten Modul (Mn) in der zweiten Mittelebene (PV) zu vergrößern oder zu verringern.

7. Gelenkvorrichtung (10) nach Anspruch 6, bei der jedes Zwischenmodul (Mi) in der zweiten Mittelebene (PV) eine dritte Seite (40G) ebenso wie eine der dritten Seite entgegengesetzte vierte Seite (40D) aufweist, **dadurch gekennzeichnet, dass** die Aufrichtvorrichtung (42) von wenigstens zwei Kabeln (44G) und (44D) gebildet ist, die jeweils im Bereich der dritten und vierten Seite (40G) und (40D) des jeweiligen Zwischenmoduls (Mi) verlaufen und entgegengesetzt an einer motorisierten Trommel (46) derart angebracht sind, dass sich eines der Kabel (44G) oder (44D) aufwickelt, wenn sich das andere abwickelt, und umgekehrt.

8. Gelenkvorrichtung (10) nach Anspruch 7, **dadurch gekennzeichnet, dass** jedes Zwischenmodul (Mi) wenigstens zwei Kanäle (52G) und (52D) für den jeweiligen Verlauf der Kabel (44G) und (44D) aufweist, wobei die Kanäle (52G) und (52D) im Wesentlichen von gleicher Länge sind und auf im Wesentlichen symmetrische Weise beidseits der Längsachse (Xi) des Zwischenmoduls (Mi) angeordnet sind.

9. Gelenkvorrichtung (10) nach einem der Ansprüche 6 bis 8, bei der das erste Gelenk (Ai) einen Ausrichtwinkel (OPVi) zwischen einem Zwischenmodul (Mi) und dem vorhergehenden Modul (Mi-1) in der zweiten Mittelebene (PV) zulässt und jedes zweite Gelenk (Ai+1) einen Ausrichtwinkel (OPVi+1) zwischen dem Zwischenmodul (Mi) und dem nachfolgenden Modul (Mi+1) in der Ebene (PV) zulässt, **dadurch gekennzeichnet, dass** die mechanische Führungsvorrichtung (12) für jedes Zwischenmodul (Mi) eine zweite mechanische Vorrichtung (56) für den Ausgleich der Ausrichtung in der zweiten Mittelebene (PV) aufweist, die den von dem ersten Gelenk (Ai) zugelassenen Ausrichtwinkel (OPVi) und den durch das zweite Gelenk (Ai+1) zugelassenen Ausrichtwinkel (OPVi+1) ausgleicht.

10. Gelenkvorrichtung (10) nach Anspruch 9, **dadurch gekennzeichnet, dass** die zweite mechanische Vorrichtung (56) für den Ausgleich der Ausrichtung von wenigstens zwei Kabeln (58G) und (58D) gebildet ist, die von der Rückseite (ARi) zur Vorderseite (AVi) des Zwischenmoduls (Mi) verlaufen und in der zweiten Mittelebene (PV) überkreuzt sind, wobei die jeweiligen ersten Enden (60G) und (60D) der Kabel (58G) und (58D) an dem vorhergehenden Modul (Mi-1) befestigt sind und die jeweiligen zweiten Enden (62G) und (62D) der Kabel (58G) und (58D) im Wesentlichen mit Bezug zum nachfolgenden Modul (Mi+1) befestigt sind.

11. Gelenkvorrichtung (10) nach Anspruch 10, **dadurch gekennzeichnet, dass** jedes Zwischenmodul (Mi) wenigstens zwei in der zweiten Mittelebene (PV) überkreuzte Kanäle (64G) und (64D) für den jeweiligen Verlauf der Kabel (58G) und (58D) aufweist, wobei die Kanäle (64G) und (64D) im Wesentlichen von gleicher Länge sind und im Wesentlichen symmetrisch bezüglich der Längsachse (Xi) des Zwischenmoduls (Mi) angeordnet sind.

12. Gelenkvorrichtung (10) nach einem der Ansprüche 1 bis 11, **dadurch gekennzeichnet, dass** jedes Modul (M) Fortbewegungsmittel (88) mit einem gemeinsamen Antrieb (92) aufweist.

## Claims

1. An articulated device (10) comprising at least three consecutive modules (M): a first module (M1), or head module, at least one intermediate module (Mi), and a last module (Mn), or tail module, connected together by at least two articulations (Ai) and (Ai+1), at least one module (M) comprising movement means (88) and each intermediate module (Mi) being connected by a first articulation (Ai) to the preceding module (Mi-1) and by a second articulation (Ai+1) to the following module (Mi+1), each articulation (Ai, Ai+1, ...) releasing at least one rotation movement in a first mid-plane (PH) of the articulated device (10) about an axis (Hi, Hi+1, ...) perpendicular to said plane (PH), and each articulation (Ai, Ai+1, ...) releasing a second rotation movement in a second mid-plane (PV) of the articulated device (10) about an axis (Vi, Vi+1, ...) perpendicular to said second mid-plane (PV), said second mid-plane (PV) being approximately perpendicular to the first mid-plane (PH), the articulated device (10) being equipped with a device (12) for mechanical control of the relative movements of said modules, this control device comprising at least one mechanical steering device (14) making it possible at least to increase or reduce the steering angle (B) between the first module (M1) and the last module (Mn) in the first mid-plane (PH), each first articulation (Ai) between an intermediate module (Mi) and a following module (Mi+1) being implemented by a junction piece (Ji) comprising at least one pivot connection (66) with its axis (Hi) perpendicular to the first plane (PH) with the intermediate module (Mi), and at least one pivot connection (68) with its axis (Vi) perpendicular to the second plane (PH) with the following module (Mi+1), each first articulation (Ai) allowing an orientation angle (OPHi) between the intermediate module (Mi) and the preceding module (Mi-1) in the first mid-plane (PH), and each second articulation (Ai+1) allowing an orientation angle (OPHi+1) between the intermediate module (Mi) and the following module (Mi+1) in the first mid-plane (PH), **characterised in that** the mechanical control device (12) comprises, for each intermediate module (Mi), a first mechanical device (30) for transferring orientation in said first mid-plane (PH) equalising the orientation angle (OPHi) allowed by the first articulation (Ai) with the orientation angle (OPHi+1) allowed by the second articulation (Ai+1).

2. An articulated device (10) according to claim 1, **characterised in that** said first mechanical orientation-transfer device (30) consists of at least two cables (32G) and (32D) circulating from the rear face (ARi) to the front face (AVi) of said intermediate module (Mi) and crossing in the first mid-plane (PH), the respective first ends (34G) and 34D) of the cables (32G) and (32D) being fixed to the following module (Mi+1), and the respective second ends (36G) and (36D) of the cables (32G) and (32D) being substantially fixed with respect to the preceding module
(Mi-1) .

3. An articulated device (10) according to claim 1 or 2, **characterised in that** each intermediate module (Mi) comprises at least two conduits (38G) and (38D) crossing in the first mid-plane (PH) for the respective circulation of the cables (32G) and (32D), said conduits (38G) and (38D) having approximately identical lengths and being disposed approximately symmetrically with respect to the longitudinal axis (Xi) of said intermediate module (Mi).

4. An articulated device (10) according to claim 1, 2 or 3, each intermediate module (Mi) comprising, in the first mid-plane (PH), at least one first side (16G) and a second side (16D) opposite to said first side, **characterised in that** said steering device (14) comprises at least two cables (18G) and (18D) circulating respectively at the sides (16G) and (16D) of each intermediate module (Mi), and mounted in opposition on a motorised drum (20) so that one of said cables (18G) or (18D) winds up while the other one unwinds and vice versa.

5. An articulated device (10) according to claim 4, **characterised in that** each intermediate module (Mi) comprises at least two conduits (26G) and (26D) for the respective circulation of the cables (18G) and (18D), said conduits (26D) and (26G) having approximately identical lengths and being disposed approximately symmetrically on either side of the longitudinal axis (Xi) of said intermediate module (Mi) in the first mid-plane (PH).

6. An articulated device (10) according to one of claims 1 to 5, **characterised in that** the control device (12) comprises a mechanical load-transfer device (42) for at least increasing or reducing the load-transfer angle (C) between the first module (M1) and the last module (Mn) in said second mid-plane (PV).

7. An articulated device (10) according to claim 6, each intermediate module (Mi) comprising, in said second mid-plane (PV), a third side (40G) and a fourth side (40D) opposite to said third side, **characterised in that** said load-transfer device (42) comprises at least two cables (44G) and (44D) circulating respectively at the third and fourth sides (40G) and (40D) of each intermediate module (Mi), and mounted in opposition on a motorised drum (46) so that one of said cables (44G) or (44D) winds up while the other one unwinds and vice versa.

8. An articulated device (10) according to claim 7, **characterised in that** each intermediate module (Mi) comprises at least two conduits (52G) and (52D) for the respective circulation of the cables (44G) and (44D), said conduits (52G) and (52D) having approximately identical lengths and being disposed approximately symmetrically on either side of the longitudinal axis (Xi) of said intermediate module (Mi).

9. An articulated device (10) according to one of claims 6 to 8, each first articulation (Ai) allowing an orientation angle (OPVi) between an intermediate module (Mi) and the preceding module (Mi-1) in the second mid-plane (PV), and each second articulation (Ai+1) allowing an orientation angle (OPVi+1) between the intermediate module (Mi) and the following module (Mi+1) in the plane (PV), **characterised in that** the mechanical control device (12) comprises, for each intermediate module (Mi), a second mechanical orientation transfer device (56) in said second mid-plane (PV) equalising the orientation angle (OPVi) allowed by the first articulation (Ai) with the orientation angle (OPVi+1) allowed by the second articulation (Ai+1) .

10. An articulated device (10) according to claim 9, **characterised in that** said second mechanical orientation-transfer device (56) comprises at least two cables (58G) and (58D) circulating from the rear face (ARi) to the front face (AVi) of said intermediate module Mi) and crossing in the second mid-plane (PV), the respective first ends (60G) and (60D) of the cables (58G) and (58D) being fixed to the preceding module (Mi-1), and the respective second ends (62G) and (62D) of the cables (58G) and (58D) being substantially fixed with respect to the following module (Mi+1).

11. An articulated device (10) according to claim 10, **characterised in that** each intermediate module (Mi) comprises at least two conduits (64G) and (64D) crossing in the second mid-plane (PV) for the respective circulation of the cables (58G) and (58D), said conduits (64G) and (64D) having approximately identical lengths and being disposed substantially symmetrically with respect to the longitudinal axis (Xi) of said intermediate module (Mi).

12. An articulated device (10) according to one of claims 1 to 11, **characterised in that** each module (M) comprises movement means (88) with a common transmission (92).
